# EUROPÄISCHE PATENTSCHRIFT

(11) **EP 2 049 809 B1**
(45) Veröffentlichungstag und Bekanntmachung des Hinweises auf die Patenterteilung: **09.01.2013**
(21) Anmeldenummer: 07786482.5
(22) Anmeldetag: 01.08.2007
(51) Int. Cl.: F16C 3/06, B21H 7/18, B24B 5/42, B24B 39/04

(54) **VERFAHREN ZUM EINBRINGEN VON ÜBERGANGSRADIEN IN EINE KURBELWELLE UND VORRICHTUNG ZUR DURCHFÜHRUNG DES VERFAHRENS**
METHOD FOR INTRODUCING TRANSITION RADII INTO A CRANKSHAFT AND DEVICE FOR CARRYING OUT THE METHOD
PROCÉDÉ POUR MÉNAGER DES RAYONS DE TRANSITION DANS UN VILEBREQUIN, ET DISPOSITIF POUR LA MISE EN OEUVRE DU PROCÉDÉ

(30) Priorität: 11.08.2006 DE 102006037864
(43) Veröffentlichungstag der Anmeldung: 22.04.2009
(73) Patentinhaber: Maschinenfabrik Alfing Kessler GmbH, 73433 Aalen (DE)
(72) Erfinder: REEB, Alfons, 73434 Aalen (DE); SCHMIDT, Jochen, 73529 Schwäbisch Gmünd (DE)
(74) Vertreter: Schmid, Wolfgang
(86) Internationale Anmeldenummer: PCT/EP2007/006790
(87) Internationale Veröffentlichungsnummer: WO 2008/017405

(56) Entgegenhaltungen:
- EP-A1- 1 452 272
- DE-A1- 10 328 453
- DE-A1-102004 008 728
- DE-C1- 10 202 547

## Beschreibung

Die Erfindung betrifft ein Verfahren zum Einbringen von Übergangsradien in eine Kurbelwelle zwischen Hubzapfen und Kurbelwangen und/oder zwischen Lagerzapfen und Kurbelwangen, wobei der Konturverlauf der Übergänge zwischen den Kurbelwangen, den Hubzapfen und Lagerstellen der Hubzapfen und/oder den Lagerzapfen und Kurbelwangen jeweils wenigstens zwei unterschiedlich große Teilradien aufweist, die in wenigstens zwei Arbeitsschritten eingebracht werden.

Zur Steigerung der Beanspruchbarkeit von Kurbelwellen sind unter anderem Kaltverfestigungsverfahren durch Festwalzen oder durch Schlagverfestigen, zum Teil auch durch Kugelstrahlen, bekannt.

Für eine technisch wirkungsvolle Umsetzung des Verfahrens wird bei den beiden Kaltverfestigungsverfahren, nämlich Festwalzen und Schlagverfestigung, eine Konturanpassung der zu bearbeitenden Kurbelwelle gefordert. Sofern die Konturanpassung bzw. der Konturverlauf der Übergänge kontinuierlichen Radien folgt, lässt sich eine derartige Kaltverfestigung ohne großen Aufwand bezüglich einer Werkzeuganpassung realisieren.

Problematisch wird es jedoch, wenn für den Konturverlauf der Übergänge unterschiedlich große Teilradien gefordert werden, wobei entsprechend die Übergänge mit zwei oder mehr ineinander übergehenden unterschiedlichen Übergangsradien ausgelegt werden sollen. Übergänge dieser Art werden auch als Korbbogenradien bezeichnet.

Ein wesentliches Problem bei der Einbringung von Übergängen in Korbbogenradienform besteht darin, dass bei den beschriebenen Kaltverfestigungsverfahren zur Durchführung des Festigungsverfahrens ein der Radienform angepasstes Werkzeug verwendet werden muss, das sehr aufwändig in der Herstellung und damit sehr kostenintensiv ist. Darüber hinaus lassen sich auch mit derart speziell angepassten Werkzeugen nicht in jedem Fall die gewünschten Korbbogenradien herstellen. Ein derart kompliziertes Werkzeug ist aus der gattungsbildenden DE 10 2004 008 728 A1 mit zwei verschiedenen Radien bekannt.

In der DE 103 28 453 A1 ist eine Kurbelwelle beschrieben und dargestellt, wobei die Übergangsradien zwischen den Kurbelwangen und den Hubzapfen in Form von Korbbogenradien ausgeführt sind, wobei drei oder mehr Teilradien vorhanden sein können. In dieser Druckschrift finden sich jedoch keine Hinweise darauf, auf welche Weise die Korbbogenradien eingebracht werden.

Noch schwieriger wird die Situation, wenn man den Übergangsradius zur Lagerstelle des Hubzapfens nicht tangential auslaufen lässt, sondern einen Absatz dazwischen vorsieht. Durch einen derartigen Absatz verringert sich die Tragkraft der Lagerstelle durch den Auslauf des Radius. Durch die besagte Korbbogenradiengestaltung lässt sich die Tragkraft der Lagerstelle aufgrund einer größeren definierten Breite erhöhen.

Der vorliegenden Erfindung liegt daher die Aufgabe zugrunde, ein Verfahren zum Einbringen von Übergangsradien in eine Kurbelwelle zwischen Hubzapfen und Kurbelwangen der eingangs erwähnten Art zu schaffen, welche für eine hohe Belastbarkeit ausgelegt sind, jedoch mit geringerem Aufwand als bisher bekannt hergestellt werden können.

Erfindungsgemäß wird diese Aufgabe das Verfahren gemäβ Anspruch 1 gelöst.

Wie ersichtlich, können durch das erfindungsgemäße Dreischrittverfahren einfache Werkzeuge verwendet werden, wodurch das Verfahren kostengünstiger durchgeführt werden kann.

Während im ersten Arbeitsschritt ein kontinuierlicher Radius R1 bestimmter Größe eingebracht wird, wird im zweiten Arbeitsschritt das Kaltverfestigungsverfahren durchgeführt und dann im dritten Arbeitsschritt die Endkontur mit den zusammengesetzten Radien in Korbbogenform herausgearbeitet.

Die Übergangsradien können dabei vorzugsweise als axial und radial hinterlegte Übergänge mit eingeformten Radien in die Hubzapfen und/oder Kurbelwangen ausgeführt werden, können jedoch auch nur einseitig hinterlegte Übergänge oder auch tangierende Übergänge besitzen.

Durch den kontinuierlichen Radius R1, der in vorteilhafter Weise größer ist als der im zweiten Arbeitsschritt eingebrachte Radius R2, lässt sich problemlos für die Kaltverfestigung ein Werkzeug für einen Festwalzvorgang einsetzen. Anschließend wird durch das erfindungsgemäße mechanische Abtragsverfahren im dritten Arbeitsschritt die gewünschte Korbbogenform mit einer entsprechenden Nacharbeit eingebracht. Dabei ist lediglich darauf zu achten, dass nur so viel Material abgetragen wird, dass die vorher durch die Kaltverfestigung eingetretenen Druckeigenspannungen im wesentlichen beibehalten werden, wodurch der Vorteil einer Kaltverfestigung mit entsprechend hoher Tiefenwirkung genutzt werden kann und zwar ohne dass große konstruktive Änderungen mit ansonsten sehr kostspieligen Folgeänderungen erforderlich werden würden.

Von Vorteil ist es, wenn der Endradius R02, der am Übergang zur Lagerstelle liegt, in einem Absatz in die Lagerstelle einmündet. Auf diese Weise ergibt sich eine höhere Tragkraft, wobei trotzdem auch noch die Lagerstelle zur Verbesserung der Oberfläche nachbearbeitet werden kann, zum Beispiel durch ein Schleifen unter Beibehaltung des Absatzes.

Die Übergänge werden in einem Winkel zu den Längsachsen der Kurbelwangen in die Kurbelwangen eingeformt. Auf diese Weise ergibt sich eine entsprechende Hinterlegung bzw. Einarbeitung in die Kurbelwange.

Vorteilhafte Weiterbildungen und Ausgestaltungen ergeben sich aus den Unteransprüchen und aus dem nachfolgend anhand der Zeichnung prinzipmäßig beschriebenen Ausführungsbeispiel.

Es zeigt:
- Fig. 1: ausschnittsweise eine Kurbelwelle mit einem Hubzapfen, zwei Kurbelwangen und zwei Hauptlagerstellen;
- Fig. 2: das erfindungsgemäße Verfahren im ersten Arbeitsschritt mit einem axial hinterlegten kontinuierlichen Übergangsradius R1;
- Fig. 3: den zweiten Arbeitsschritt mit einem Werkzeug zur Kaltverfestigung;
- Fig. 4: den dritten Arbeitsschritt mit Einbringung des Übergangs in Form von Korbbogenradien mit einem Hauptradius R01 und zwei kleineren zweiten und dritten Radien R02 und R03;
- Fig. 5: ein Ausführungsbeispiel für einen dritten Arbeitsschritt, wobei neben dem Hauptradius R01 lediglich ein zweiter Radius R02 zur Lagerstelle vorgesehen ist; und
- Fig. 6: eine schematische Darstellung der zwei Konturenverläufe als Übergang zwischen der Kurbelwange und dem Hubzapfen mit Vorstadiumkontur und Endstadiumkontur.

Grundsätzlich sind Maschinen und Einrichtungen zum Einbringen von Übergangsradien und zu deren Härtung allgemein bekannt, weshalb nachfolgend nicht näher darauf eingegangen wird. Hierzu wird unter anderem auf die bereits erwähnte DE 10 2004 008 728 A1 und die DE 102 02 547 C1 verwiesen.

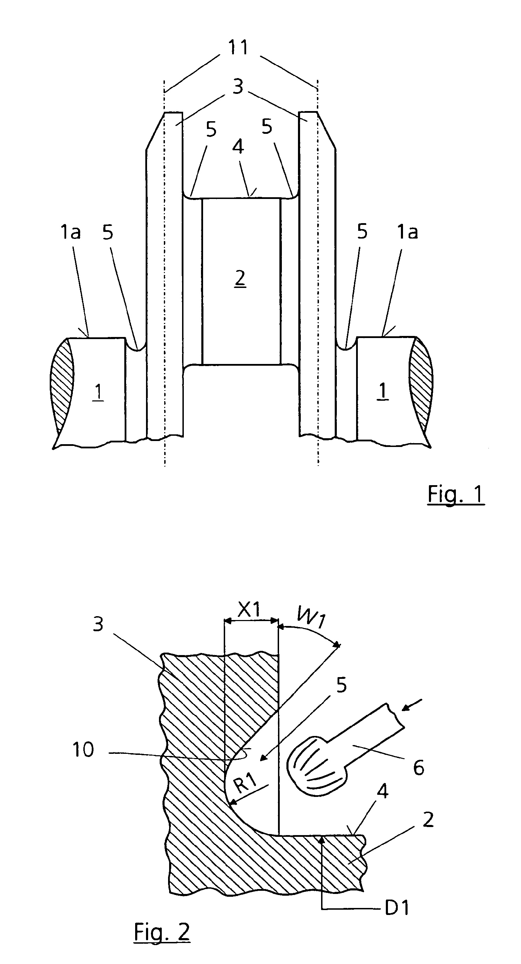

Fig. 1 zeigt ausschnittsweise eine Kurbelwelle 1 mit einem Hubzapfen 2, zwei seitlich davon angeordneten Kurbelwangen 3 und mit jeweils einem neben einer Kurbelwange 3 angeordneten Lagerzapfen 1a (auch Hauptlagerstelle genannt). Der Hubzapfen 2 ist mit einer Lagerstelle 4 für ein nicht dargestelltes Pleuel versehen. Zwischen dem Hubzapfen 2 und den seitlich davon angeordneten beiden Kurbelwangen 3 sind Übergänge 5 mit Radien vorgesehen. Gleiches gilt für Übergänge 5 zwischen den Lagerzapfen 1a und den Kurbelwangen 3.

In der Fig. 2 ist ausschnittsweise eine Kurbelwelle 1 mit einem Hubzapfen 2 und einer Kurbelwange 3 dargestellt. Der Hubzapfen 2 ist mit einer Lagerstelle 4 für eine Lagerung eines nicht dargestellten Pleuels versehen. Gemäß Fig. 2 wird mit einem nicht näher dargestellten Fräswerkzeug 6 ein axial hinterlegter kontinuierlicher Übergangsradius R1 mit einer axialen Hinterlegungstiefe X1 in die Kurbelwange 3 in den Übergang 5 eingefräst. Mit "axial" ist die Längsrichtung der Kurbelwelle 1 gemeint und mit "hinterlegt" und "Hinterlegungstiefe" ist gemeint, in welchem Ausmaß der Übergang in die Kurbelwange 3 eingefräst wird.

Anstelle eines Fräswerkzeugs kann selbstverständlich zum Einbringen des Konturverlaufs mit dem Übergangsradius R1 auch ein Drehwerkzeug oder ein Schleifwerkzeug verwendet werden.

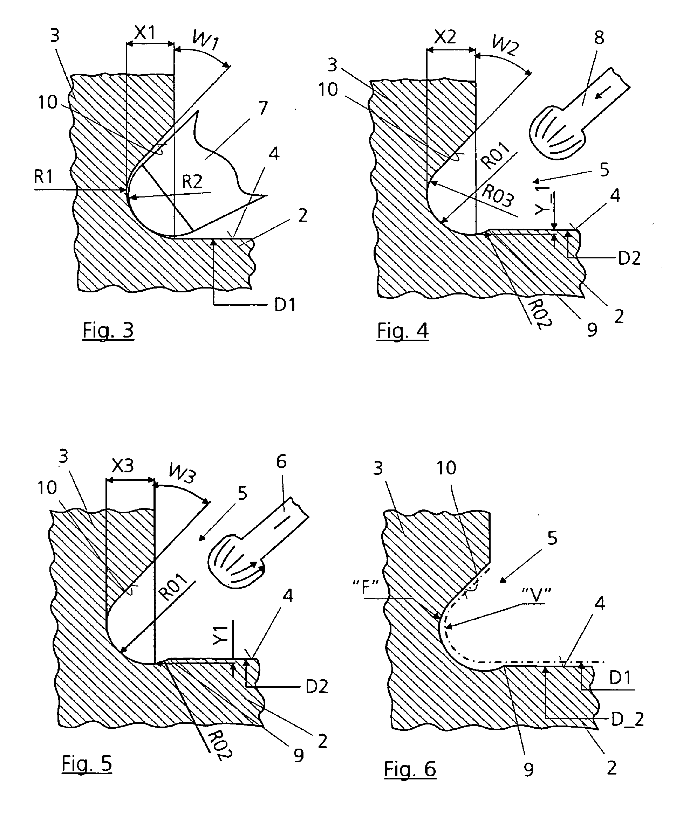

Im zweiten Arbeitsschritt wird gemäß Fig. 3 der Übergang 5 mit dem Übergangsradius R1 mit einem Festwalzwerkzeug 7 in bekannter Weise kalt verfestigt. Das Festwalzwerkzeug 7 besitzt auf seiner vorderen Seite einen kontinuierlichen Werkzeugradius R2, der damit in den Übergang 5 bei dem Kaltverfestigungsvorgang eingedrückt wird. Der bei dem Kaltverfestigungsvorgang auf diese Weise eingebrachte zweite kontinuierliche Radius R2 ist geringfügig kleiner als der im ersten Arbeitsschritt eingebrachte Radius R1. Der Radius R2 kann zwischen 3 und 15% kleiner, vorzugsweise zwischen 5 und 10% kleiner, sein.

In der Fig. 4 ist der dritte Arbeitsschritt dargestellt. Mit einem weiteren Fräswerkzeug 8 (ebenso auch alternativ ein Drehoder Schleifwerkzeug) wird in einem mechanischen Abtragsverfahren für den Konturverlauf des Übergangs 5 ein Hauptradius R01 und einen sich daran anschließenden zweiten Radius R02, der den Übergang zu der Lagerstelle 4 des Hubzapfens 2 bildet, und einen dritten Radius R03, der den Übergang zu der Kurbelwange 3 bildet, eingebracht. Dabei entsteht eine neue axiale Hinterlegungstiefe X2 und gleichzeitig auch eine radiale Hinterlegungstiefe Y1 zu dem Hubzapfen 2. Bei dem Abtragsverfahren wird durch die Hinterlegungstiefe Y1 ein Absatz 9 am Übergang zu der Lagerstelle 4 des Hubzapfens 2 erzeugt und zwar mit dem Radius R03, wodurch eine definierte Lagerstellenbreite geschaffen wird.

Die sich an den Hauptradius R01 seitlich anschließenden Radien R02 und R03 sind kleiner als der Hauptradius R01.

Die Fig. 5 zeigt ein weiteres Ausführungsbeispiel für den Endzustand gemäß Fig. 4, wobei hier lediglich neben dem Hauptradius R01 ein zweiter Radius R02 beim Übergang zu der Lagerstelle 4 des Hubzapfens 2 vorgesehen ist.

Die Lagerstelle 4 kann unter Beibehaltung eines Absatzes 9 bei Bedarf auch noch mechanisch endbearbeitet werden, zum Beispiel durch Schleifen.

Wie aus den Figuren 4 und 5 ersichtlich ist, werden bei dem mechanischen Abtragsverfahren die erwünschten zusammengesetzten Übergangsradien als Korbbogenradien mit den Radien R01, R02 und gegebenenfalls R03 erzeugt.

Bei einer axialen Hinterlegung X1 des Konturverlaufes des Übergangs 5 in die Kurbelwange 3 liegt eine Übergangswandung 10 in einem Winkel W1 zu der Längsachse 11 der Kurbelwange 3. Die Längsachse 11 der Kurbelwange 3 liegt damit senkrecht zur Längsachse der Kurbelwelle 1.

Gemäß Fig. 2 ist der Winkel W1 vorgesehen. Der gleiche Winkel W1 bleibt auch bei der Kaltverfestigung im zweiten Arbeitsschritt gemäß Fig. 3 bestehen. Der Winkel W2 nach dem dritten Arbeitsschritt kann gleich wie W1 oder auch anders sein. Gleiches gilt für den Winkel W3 nach der Fig. 5. Die Winkel W1, W2 und W3 sollten kleiner als 55° sein und vorzugsweise in einem Bereich zwischen 30 und 45° liegen.

In der Fig. 6 sind nochmals schematisch beispielhaft die zwei Konturen am Übergang 5 mit einer Vorstadiumkontur V zum Hubzapfen 2 mit dem Durchmesser D1 und einer Endstadiumkontur F zum Hubzapfen 2 mit dem Durchmesser D2 und dem Absatz 9 dargestellt.

Die Übergänge 5 zwischen den Lagerzapfen 1a und den Kurbelwangen 3 können in gleicher Weise, wie vorstehend anhand der Übergänge 5 zwischen den Kurbelwangen 3 und den Hubzapfen 2 beschrieben, hergestellt werden.

## Patentansprüche

1. Verfahren zum Einbringen von Übergangsradien in eine Kurbelwelle (1) zwischen Hubzapfen (2) und Kurbelwange (3) und/oder zwischen Lagerzapfen (10) und Kurbelwangen (3), wobei der Konturverlauf der Übergänge zwischen den Kurbelwangen (3), den Hubzapfen (2) und Lagerstellen (4) der Hubzapfen (2) und/oder den Lagerzapfen (10) und Kurbelwangen (3) jeweils wenigstens zwei unterschiedlich große Teilradien (R1,R2) aufweist, die in wenigstens zwei Arbeitsschritten eingebracht werden, wobei,
a) in einem ersten Arbeitsschritt ein mechanisches Abtragsverfahren im Übergang zwischen der Kurbelwänge (3) und dem Hubzapfen (2) auf einen kontinuierlichen Radius (R1) durchgeführt,
b) anschließend in einem zweiten Arbeitsschritt eine Kaltverfestigung durch einen Festwalzvorgang in dem Übergang mit einen zweiten, kontinuierlichen Radius (R2) durchgeführt und
c) abschließend in einem dritten Arbeitsschnitt in einem weiteren mechanischen Abtragsverfahren unterschiedliche Endradien in Form eines Hauptradius (R01) und eines zweiten Radius (R02), der den Übergang zu der Lagerstelle (4) des Hubzapfens (2) bildet, eingebracht werden, wobei sich der Radius (R02) an den Hauptradius (R01) anschließt und kleiner ist als der Hauptradius
(R01), **dadurch gekennzeichnet, daß** die Kaltverfestigung durch einen Festwalzvorgang erfolgt und die Übergänge (5) mit ihren Übergangswandungen (10) zu den Kurbelwangen (3) in einem Winkel (W1,W2,W3) von weniger als 55° zu den Längsachsen (11) der. Kurbelwange (3) in die Kurbelwangen (3) eingeformt werden.

2. Verfahren nach Anspruch 1,
**dadurch gekennzeichnet, dass** der in dem zweiten Arbeitsschritt eingebrachte Radius (R2) kleiner ist als der in dem ersten Arbeitsschritt eingebrachte Radius (R1).

3. Verfahren nach Anspruch 2,
**dadurch gekennzeichnet, dass** der Radius (R2) zwischen 3 und 15% kleiner ist als der Radius (R1).

4. Verfahren nach Anspruch 3,
**dadurch gekennzeichnet, dass** der Radius (R2) zwischen 5 und 10% kleiner ist als der Radius (R2).

5. Verfahren nach einem der Ansprüche 1 bis 4,
**dadurchgekennzeichnet**, dass der wenigstens eine zweite Endradius (R02) am Übergang zur Lagerstelle (4) oder zum Lagerzapfen (1a) liegt und in einem Absatz (9) in die Lagerstelle (4) bzw. den Lagerzapfen (1a) einmundet.

6. Verfahren nach einem der Ansprüche 1 bis 5,
**dadurch gekennzeichnet, dass** ein dritter Endradius (R03) am Übergang in die Kurbelwange (3) eingebracht wird.

7. Verfahren nach einem der Ansprüche 1 bis 6,
**dadurch gekennzeichnet, dass** die Lagerstelle (4) nach dem dritten Arbeitsschritt mechanisch endbearbeitet wird.

8. Verfahren nach Anspruch 7,
**dadurch gekennzeichnet, dass** die mechanische Endbearbeitung durch Schleifen erfolgt.

9. Herfahren nach einem der Ansprüche 1 bis 8,
**dadurch gekennzeichnet, dass** die mechanischen Abtragsverfahren durch Formdrehen, Schleifen, oder Fräsen erfolgen.

10. Verfahren nach Anspruch 1,
**dadurh gekennzeichnet**, dass die Winkel zwischen 30 und 45° liegen.

## Claims

1. Method for introducing transition radii into a crankshaft (1) between crank pins (2) and crank webs (3) and/or between the bearing pins (1a) and crank webs (3), wherein the contour profile of the transitions between the crank webs (3), the crank pins (2) and bearings (4) of the crank pins (2) and/or between the bearing pins (1a) and the crank webs (3) has at least two differently sized partial radii (R1,R2) respectively, which are introduced in at least two operating steps, wherein
a) in a first operating step, a mechanical abrasion process is carried out in the transition between the crank web (3) and the crank pin (2) on a continuous radius (R1)
b) subsequently, in a second operating step, a strain-hardening is curried out in the transition with a second, continuous radius (R2),
c) finally, in a third operating step, in a further mechanical abrasion process, different final radii are introduced in the form of a main radius (R01) and a second radius (R02), which forms the transition to the bearing (4) of the crank pin (2), the radius (R02) adjoining the main radius (R01) and bering smaller than the main radius (R01)
**characterized in that**
the strain-hardening is carried out by means of deep rolling and the transitions (5) with their transition walls (10) to the crank webs (3) are formed intro the crank webs (3) in an angle (W1,W2,W3) of less than 55° to the longitudinal axes (11) of the crank webs (3).

2. The method of claim 1,
**characterized in that**
the radius (R2) introduced in the second operating step is smaller than the radius (R1) introduces in the first operating step.

3. The method of claim 2,
**characterized in that**
the radius (R2) is between 3 and 15% smaller than the radius (R1).

4. The method of claim 3,
**characterized in that**
the radius (R2) is between 5 and 10% smaller than the radius (R1).

5. The method of any one of claims 1 to 4,
**characterized in that**
the at least one second end radius (R02) is located at the transition to the bearing (4) or to the bearing pin (1a) and ends in a step (9) intro the bearing (4) or the bearing pin (1a).

6. The method of any one of claims 1 to 5,
**characterized in that**
a third end radius (R03) is introduced at the transition into the crank web (3).

7. The method of any one of claims 1 to 6,
**characterized in that**
the bearing (4) is mechanically finished after the third operating step.

8. The method of claim 7,
**characterized in that**
the mechanical finishing is carried out by means of grinding.

9. The method of any one of claims 1 to 8,
**characterized in that**
the mechanical abrasion processes are carried out by means of contour turning, grinding or milling.

10. The method of claim 1,
**characterized in that**
the angles lie between 30 and 45°.

## Revendications

1. Procédé pour ménager des rayons de transition dans un vilebrequin (1) entre un axe de piston (2) et des flasques de vilebrequin (3) et/ou entre des tourillons (1a) et des flasques de vilebrequin (3), dans lequel le profil du contour des transitions entre les flasques de vilebrequin (3), les axes de pistons (2) et les points d'appui de palier (4) des axes de piston (2) et/ou entre les tourillons (1a) et les flasques de vilebrequin (3), présentent respectivement au moins deux rayons de courbure partiels qui sont différents (R1, R2), réalisés au cours d'au moins deux phases de travail distinctes, dans lequel :
a) au cours d'une première phase opératoire, on effectue un usinage mécanique d'enlèvement de matière pour réaliser un rayon continu (R1), entre les joues de vilebrequin (3) et l'axe de piston (2) ;
b) directement à la suite, au cours d'une deuxième phase opératoire on effectue un durcissement à froid pour réaliser une transition vers un deuxième rayon continu (R2) ; et
c) directement à la suite, au cours d'une troisième phase opératoire, on effectue un autre usinage mécanique par enlèvement de matière pour réaliser des rayons de courbure différents sous la forme d'un rayon de courbure principal (R01) et d'un deuxième rayon de courbure (R02) qui constitue la transition vers le point d'appui de palier (4) de l'axe de piston (2), dans lequel le rayon de courbure (R02) se raccorde au rayon de courbure principal (R01) et est plus petit que le rayon de courbure principal (R01),
**caractérisé en ce que** le durcissement à froid est effectué par un laminage à rouleaux fixes et les transitions (5) vers les flasques de vilebrequin (3), par l'intermédiaire de leurs parois de transitions (10) sont formées avec des angles (W1, W2, W3) de moins de 55° par rapport à l'axe longitudinal (11) du vilebrequin (3) dans les flasques de vilebrequin (3).

2. Procédé selon la revendication 1,
**caractérisé en ce que**
le rayon de courbure (R2) réalisé au cours de la deuxième phase opératoire est inférieur au rayon de courbure (R1) réalisé au cours de la première phase opératoire.

3. Procédé selon la revendication 2,
**caractérisé en ce que**
le rayon de courbure (R2) a une mesure de 3 à 15% inférieure à celle du rayon de courbure (R1).

4. Procédé selon la revendication 3,
**caractérisé en ce que**
le rayon de courbure (R2) a une mesure de 5 à 10% inférieure à celle du rayon de courbure (R1).

5. Procédé selon l'une des revendications 1 à 4,
**caractérisé en ce que**
ledit au moins un deuxième rayon de courbure fînal (R02) se situe à la transition avec le point d'appui de palier (4) ou avec le tourillon (1a) et pénètre par un gradin (9) dans le point d'appui de palier (4), respectivement dans le tourillon (1a).

6. Procédé selon l'une des revendications 1 à 5,
**caractérisé en ce que**
l'on réalise un troisième rayon (R03) à la transition vers la flasque de vilebrequin (3).

7. Procédé selon l'une des revendications 1 à 6,
**caractérisé en ce que**
le point d'appui de palier (4) est soumis à un usinage de finition mécanique après la troisième phase de travail.

8. Procédé selon la revendication 7,
**caractérisé en ce que**
les usinages mécaniques de finition sont effectués par ponçage.

9. Procédé selon l'une des revendications 1 à 8,
**caractérisé en ce que**
les usinages mécaniques d'enlèvement de matière sont effectués par tournage, par ponçage ou par fraisage.

10. Procédé selon la revendication 1,
**caractérisé en ce que**
les angles sont compris entre 30 et 45°.
